(19)

**Europäisches Patentamt**
**European Patent Office**
**Office européen des brevets**

(11) **EP 4 555 123 B1**

(12) **EUROPEAN PATENT SPECIFICATION**

(45) Date of publication and mention
of the grant of the patent:
**04.02.2026 Bulletin 2026/06**

(21) Application number: **22769580.6**

(22) Date of filing: **23.08.2022**

(51) International Patent Classification (IPC):
**C25B 1/04** *(2021.01)*    **C25B 9/70** *(2021.01)*
**C25B 15/02** *(2021.01)*    **C25B 15/021** *(2021.01)*
**C25B 15/023** *(2021.01)*    **C25B 15/025** *(2021.01)*
**C25B 15/027** *(2021.01)*    **G05B 13/04** *(2006.01)*
**G05D 7/06** *(2006.01)*    **G05D 23/19** *(2006.01)*
**H02J 15/00** *(2026.01)*

(52) Cooperative Patent Classification (CPC):
**C25B 1/04; C25B 9/70; C25B 15/02; C25B 15/021;**
**C25B 15/023; C25B 15/025; C25B 15/027;**
**G05B 13/04; G05D 7/0623; G05D 23/1904;**
C25B 15/00; H02J 15/008; Y02E 60/36

(86) International application number:
**PCT/EP2022/073448**

(87) International publication number:
**WO 2024/041728 (29.02.2024 Gazette 2024/09)**

(54) **POWER-TO-HYDROGEN PLANT, CONTROL UNIT AND CONTROL METHOD THEREOF**

KRAFT-WASSERSTOFF-ANLAGE, STEUEREINHEIT UND STEUERVERFAHREN DAFÜR

CENTRALE ÉLECTRIQUE Á HYDROGÈNE, UNITÉ DE COMMANDE ET PROCÉDÉ DE
COMMANDE ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.05.2025 Bulletin 2025/21**

(73) Proprietor: **Hitachi Energy Ltd
8050 Zürich (CH)**

(72) Inventors:
• **FANG, Jiakun**
  **Wuhan, Hubei 430000 (CN)**
• **HU, Kewei**
  **Wuhan, Hubei 430000 (CN)**
• **ZHONG, Zhiyao**
  **Wuhan, Hubei 430000 (CN)**
• **HUANG, Danji**
  **Wuhan, Hubei 430000 (CN)**
• **YING, Yuheng**
  **Wuhan, Hubei 430000 (CN)**
• **WANG, Chuang**
  **Wuhan, Hubei 430000 (CN)**
• **ZHANG, Weichi**
  **100015 Beijing (CN)**
• **YANG, Xiaobo**
  **100015 Beijing (CN)**

(74) Representative: **Epping - Hermann - Fischer
Patentanwaltsgesellschaft mbH
Schloßschmidstraße 5
80639 München (DE)**

(56) References cited:
  **AT-A4- 524 659**      **AT-B1- 524 659**
  **US-A1- 2021 156 039**

• **ZHAO DONGQI ET AL: "Dynamic hierarchical
modeling and control strategy of high
temperature proton exchange electrolyzer cell
system", INTERNATIONAL JOURNAL OF
HYDROGEN ENERGY, vol. 47, no. 53, 1 June 2022
(2022-06-01), AMSTERDAM, NL, pages 22302 -
22315, XP093030905, ISSN: 0360-3199, DOI:
10.1016/j.ijhydene.2022.05.067**

## Description

### TECHNICAL FILED

The disclosure relates to a maximum efficiency point tracking (MEPT) control for a power-to-hydrogen (PtH) plant.

### BACKGROUND

Power-to-Hydrogen (PtH) is regarded as one of the most important technologies in the process of decarbonization and carbon-neutral. Against this backdrop, PtH is becoming more and more popular because of its advantages of high mass energy density and being environmentally friendly. However, in the prior art, a PtH plant is usually operated under constant parameters, which causes a problem of deviating from a high efficiency point of the PtH plant, especially when the PtH plant takes renewable energy that might change intermittently. This is particularly problematic for a large-scale PtH system because any deviation from the high efficiency point will result in high power losses.

### SUMMARY

The present invention provides a control unit for a Power-to-Hydrogen (PtH) plant according to claim 1, a PtH plant according to claim 10, and a control method according to claim 16. Preferred embodiments are set forth in the dependent claims.

.

. US 2021/156039 A1 discloses a modular system for hydrogen generation includes a plurality of cores and a hub. Each core includes an electrolyzer and a power supply. The power supply is operable to manage electrical power to the electrolyzer of the core and is redundant to the power supply of at least another one of the plurality of cores. The hub includes a water module, a heat exchange module, and a switchgear module. The water module includes a water source in fluid communication with the electrolyzer of each one of the plurality of cores, the heat exchange module includes a heat exchanger in thermal communication with the electrolyzer of each one of the plurality of cores, and the switchgear module includes a switch activatable to electrically isolate the power supply of each one of the plurality of cores.

AT 524 659 A4 relates to a method for allocating electrical energy within an electrolysis plant for generating oxygen and hydrogen. The electrolysis system includes a system control device and at least two management devices. Each management device includes at least one management control device and at least two electrolysis devices.

ZHAO DONGQI ET AL: "Dynamic hierarchical modeling and control strategy of high temperature proton exchange electrolyzer cell system", INTERNATIONAL JOURNAL OF HYDROGEN ENERGY, vol. 47, no. 53, 1 June 2022 (2022-06-01), pages 22302-22315 relates to high temperature proton exchange membrane electrolyzer cells (HTPEMECs) that show faster reaction kinetics than the low temperature PEMECs (LT-PEMECs) and are suitable for utilizing waste heat from the industry. More specifically, hierarchical models are developed to investigate the transient behavior of the HT-PEMEC system with hydrogen recirculation.

### BRIEF DESCRIPTION OF THE DRAWINGS

The disclosed aspects will hereinafter be described in connection with the appended drawings that are provided to illustrate but not to limit the scope of the disclosure.

Figure 1 illustrates the multi-energy interconversion in a PtH plant.

Figure 2 illustrates the bubble effect in an electrolyzer.

Figure 3 illustrates a PtH plant according to an example of the disclosure.

Figure 4 illustrates an implementation of the PtH plant shown in Figure 3.

Figure 5 illustrates an example of a distributed control unit.

Figure 6 illustrates an example of a central control unit.

Figure 7 is a flowchart of a MEPT controlling process according to an example of the disclosure.

Figure 8 is a flowchart of a MEPT controlling process according to another example of the disclosure.

Figure 9 illustrates an example the two optimizations of the power distribution.

Figure 10 illustrates an implementation of the PtH shown in Figure 4.

Figure 11 illustrates another implementation of the PtH shown in Figure 4.

Figure 12 is flowchart of a control method for a PtH plant according to an example of the disclosure.

Figure 13 is a simulation figure showing a coordination of the temperature and the velocity for the maximum PtH efficiency.

Figure 14 is a simulation figure showing the maximum efficiency and the optimized power of the pump, the heater and the electrolyzer with different supplied current.

Figure 15 is a simulation figure showing the maximum efficiency point of efficiency (Figure 15(a)), temperature (Figure 15(b)), velocity (Figure 15(c)), and voltage (Figure 15(d)) with fluctuating supplied current.

**DETAILED DESCRIPTION**

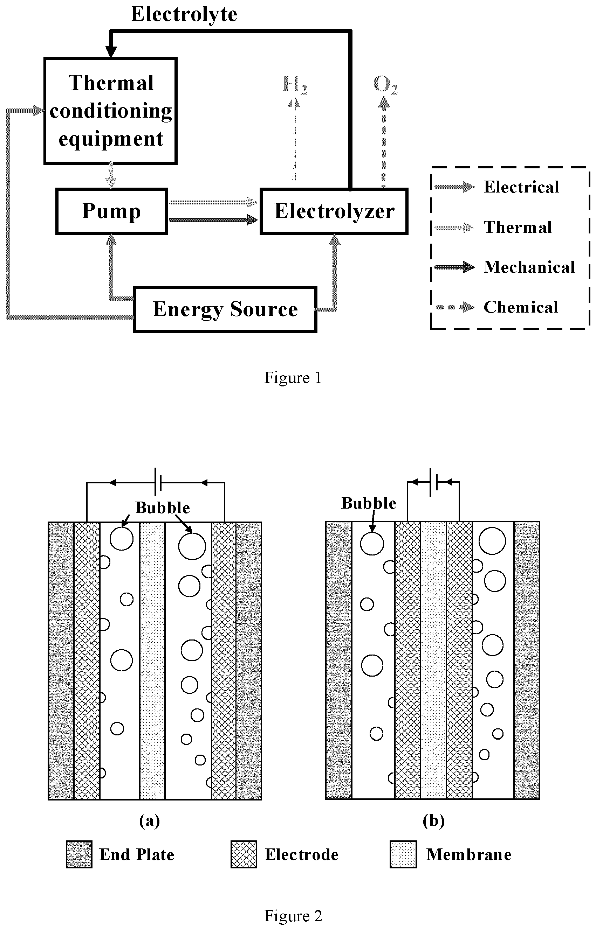

Examples of the disclosure relate to MEPT control for a PtH plant. The PtH plant comprises components such as an electrolyzer, an auxiliary equipment (such as a pump, a heater, a cooler and a heater exchanger) coupled with the electrolyzer, and a power supply unit for supplying power to the electrolyzer and the auxiliary equipment. The PtH plant is a multi-energy system where various types of energy, such as electrical energy, thermal energy, mechanical energy and chemical energy, interact and interconvert each other. The multi-energy interconversion in the PtH plant is shown in Figure 1. As shown in Figure 1, the PtH plant is powered by electricity taken from an energy source, the taken energy is distributed among the electrolyzer and the auxiliary equipment such as the pump and the thermal conditioning equipment (e.g., a heater, a cooler or a heat exchanger) and transformed into mechanical, thermal and chemical energy. Different types of energy are carried to the electrolyzer by the flowing electrolyte and transformed into chemical energy stored in hydrogen.

The mechanical energy (e.g., the flowing electrolyte) provided by the pump has an important impact on the PtH plant due to so-called bubble effect, as shown in Figure 2. For the zero-gap cell (see Figure 2(a)), the adhering bubbles on the catalyst isolate the contact of the electrolyte and the catalyst, which means the covered area on the catalyst is invalid for the electrolyte (e.g., water electrolysis). Therefore, the bubble effect tends to reduce the effective area of electrochemical reactions on electrodes of the electrolyzer. For the gap cell (see Figure 2(b)), the bubbles will not only reduce the effective area of the electrode but also decrease the conductivity of the electrolyte. This is because the flow channel is contained in the electrically conductive path. Since the conductivity of the bubbles is far lower than the electrolyte, the existence of bubbles possesses negative effects on cell resistance. Therefore, adequate power should be allocated to the pump to guarantee the bubble detachment.

Thermal energy is also important for high-performance of the PtH plant. There are two main benefits of high temperature for electrolyzation (e.g., water electrolysis). From the thermodynamic point of view, the electrical energy required for the electrolyzation (e.g., water splitting) is reduced since more thermal energy is supplied to the electrolyzer. On the other hand, the electrodes are better activated under a high temperature, which indicates the energy conversion efficiency increases.

An important improvement of the disclosure is that it provides a coordinated control of various components of the PtH plant using a model to ensure the PtH plant can operate at a maximum efficiency point. Examples of the disclosure are described below.

The MEPT control according to examples of the disclosure can be applied to a middle-scale PtH plant as well as a large-scale PtH plant. For example, the power, current and voltage of a medium-scale electrolyzer in the PtH plant can be 0.5MW, 1800A, and 250V, respectively. The power, current and voltage of a large-scale electrolyzer in the PtH plant can be 5 MW, 5000A, and 1000V, respectively.

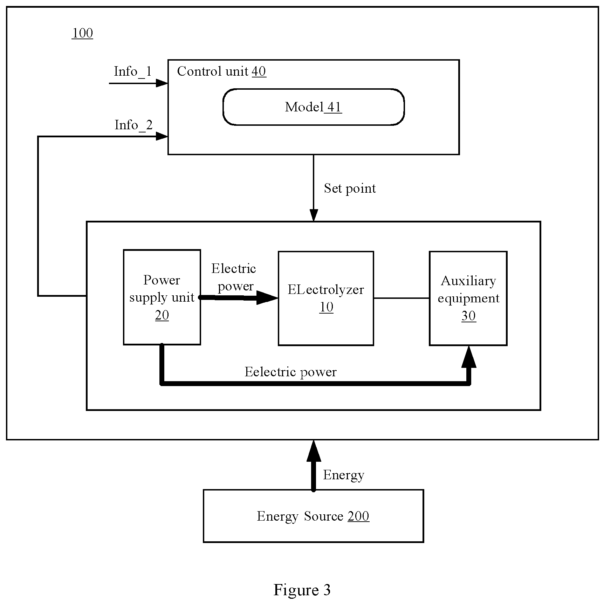

Figure 3 illustrates a PtH plant 100 according to an example of the disclosure. The PtH plant 100 takes energy from an energy source 200. The energy source 200 can be renewable energy source such as wind, solar, water, or geothermal. The energy source 200 also can be an on-grid system or an off-grid system. The energy source 200 also can be a hybrid system of grid and battery that can deliver power during either on-grid or off-grid conditions.

According to examples of the disclosure, the efficiency of the PtH plant 100 is represented by a ratio of hydrogen energy generated by the PtH plant 100 to energy consumed by the PtH plant 100. Examples of the disclosure aims to achieve a maximum efficiency point of the PtH plant. The maximum efficiency point is represented by an objective function including a maximum ratio that corresponds to the maximum efficiency point of the PtH plant.

The objective function is written as:

$$\max P\_H_2 / \Sigma P\_i \quad 1 \leqslant i \leqslant n \qquad (1)$$

where $P\_H_2$ is the power of hydrogen produced by the PtH plant; and
$\Sigma P\_i$ is a sum of power consumed by components of the PtH plant, and n is a number of the components.

In an example, the energy input to the PtH plant 100 is distributed among a pump, a heater and an electrolyzer, and the objective function is written as:

$$\max P_{H_2} / (P_{pump} + P_{heater} + P_{electrolyzer}) \qquad (2)$$

where $P\_H_2$ is the power of hydrogen produced by the PtH plant;

$P_{pump}$ is the power consumed by the pump;

$P_{heater}$ is the power consumed by the heater; and

$P_{electrolyzer}$ is the power consumed by the electrolyzer.

According to the present invention, the output of the PtH plant 100 is predetermined, i.e., the hydrogen production rate of the PtH plant 100 is predetermined, for example, the hydrogen production rate is prefixed to a certain level according to a user requirement, the maximum ratio is a ratio of hydrogen energy corresponding to the predetermined hydrogen production rate to a minimum amount of energy required by the PtH plant 100. That is to say, in the case that the output energy is prefixed and the energy required to input to the PtH plant is minimum, the maximum efficiency point of the PtH plant 100 can be achieved.

In a reference example, the input of the PtH planet 100 is predetermined, i.e., the amount of energy input to the PtH plant 100 is predetermined, for example, the amount of the input energy is prefixed to a certain level according to a specific use case, the maximum ratio is a ratio of hydrogen energy generated by the PtH plant 100 to the predetermined amount of energy input to the PtH plant 100. That is to say, in the case that the input energy is prefixed and the output energy generated by consuming the prefixed input energy is maximum, the maximum efficiency point of the PtH plant 100 can be achieved.

With reference to Figure 3, the PtH plant 100 comprises an electrolyzer 10, a power supply unit 20, an auxiliary equipment 30 and a control unit 40.

The electrolyzer 10 is used to electrolyze the electrolyte, such as alkaline solution or water, to generate hydrogen gas, and also to generate oxygen gas. The disclosure relates only to the production of hydrogen gas.

The electrolyzer 10 is a core component of the PtH plant 100. Various types of water electrolyzers can be used, for example, alkaline water electrolysis (AE), proton exchange membrane water electrolysis (PEM), and anion exchange membrane water electrolysis (AEM). These electrolyzers have their own characteristics. For example, AE is recognized as the most mature technology with low investment cost and high capacity. PEM features high current density and part load range due to the excellent performance of the polymer membrane. The MEPT control of the disclosure can be applied to those types of water electrolyzers.

The power supply unit 20 receives electricity that is taken from the energy source 200 and supplies electric power to the electrolyzer 10 and the auxiliary equipment 30. The output of the power supply unit 20 is adjustable, for example, by controlling at least one of an output current, an output voltage and an output power of the power supply unit 20, and thus the electric power supplied to each of the electrolyzer 10 and the auxiliary equipment 30 is also adjustable.

The auxiliary equipment 30 is coupled to the electrolyzer 10. In an example, the auxiliary equipment 30 is integrated with the electrolyzer 10 to form a single device. The auxiliary equipment 30 includes a pump for pumping electrolyte into the electrolyzer 10. The pump has an adjustable pump speed to adjust the flow velocity of the electrolyte pumped into the electrolyzer 10. The auxiliary equipment 30 may further include at least one of a heater, a cooler, and a heat exchanger for regulating the temperature of the electrolyte.

The control unit 40 is in communication with the electrolyzer 10, the power supply unit 20, and the auxiliary equipment 30, respectively. The control unit 40 includes such a MEPT control strategy that components of the PtH plant are cooperatively controlled such that the PtH plant can operate at the maximum efficiency point.

Continuing with reference to Figure 3, the control unit 40 includes at least one model 41. The at least one model can be implemented by means of a variety of techniques such as look up table, formula, equation, AI-based model, and NM-based model. In an example, the at least one model includes variables, coefficients and constants.

In an example, the control unit 40 receives the predetermined information Info_1 (i.e., the predetermined hydrogen production rate or the predetermined amount of energy input to the PtH plant 100) and the measured information Info_2 (i.e. measured parameters indicative status of the components of the PtH plant 100). The measured parameters are input to the at least one model 41 as variables of the at least model 41. Then, the control unit 40 calculates MEPT of the PtH plant 100 by solving the objective function using the at least one model 41. Then, the control unit 40 determines one or more set points for a coordinated operation of the components of the PtH plant 100 based on a solution obtained by solving the objective function. The obtained solution can be seen as an optimal solution to achieve the maximum efficiency defined by the objective function. Then, the control unit 40 provides the one or more set points to one or more of the components of the PtH plant 100 to operate the PtH 100 at the maximum efficiency point.

In some cases, there may a problem with aging of the electrolyzer 10 and thus the at least one model 41 is not suitable for the current situation of the PtH plant 100 anymore. In view of this problem, according to an example of the disclosure, the control unit 40 performs an update of the at least one model 41 to solve this problem. The update can be performed on-line and/or off-line. The update can be performed periodically (e.g., once a month or once a year) or in response to a trigger signal indicating that the aging of the electrolyzer has reached a certain level.

In an example, the control unit 40 calculates the update of the at least one model 41 based on the measured parameters. The update of the at least one model 41 includes an update of the coefficients and/or constants of the at least one model 41.

The coefficients and constants of the at least one model 41 include those parameters related to an electrochemical reaction, diphasic flow and temperature dependence of the electrolyzer 10. An example of the coefficients and constants of the at least one model 41 is described in Table 1 below.

Table 1

| | Constants and coefficients | |
|---|---|---|
| | $h_{channel}$ | Channel width |
| | $h_{cata}$ | Catalyst thickness |
| | $h_{mem}$ | Membrane thickness |
| | $y_{max}$ | Height of the electrolyzer |
| Electrochemical reaction | $F$ | Faraday constant |
| | $i_{0,c}$ | Cathodic exchange current density |
| | $\sigma_{cata}$ | Conductivity of the catalyst |
| | $\sigma_{mem}$ | Conductivity of the membrane |
| | $U_{rev}$ | Reversible voltage |
| | $n$ | Number of electrolysis units of the electrolyzer |
| | $\rho_{KOH}$ | Density of the electrolyte |
| | $\rho_{H2}$ | Density of hydrogen |
| | $\rho_{O2}$ | Density of oxygen |
| Diphasic flow | $\mu_{KOH}$ | Viscosity of the electrolyte |
| | $M_{H2}$ | Molar mass of hydrogen |
| | $M_{O2}$ | Molar mass of oxygen |
| | $h$ | Heat transfer coefficient |
| Temperature dependence | $A$ | Area for heat transfer |
| | $T_{ref}$ | Reference temperature |

In an example, the measured parameters include parameters that are measured at the components of the PtH plant 100 and indicative of status of the components. For example, the measured parameters include: a current in the electrolyzer 10 (e.g., a current flowing from an anodic electrode of the electrolyzer to a cathodic electrode of the electrolyzer); a voltage across the electrolyzer 10; a velocity of electrolyte flowing into the electrolyzer 10; and a temperature of the electrolyte in the electrolyzer 10.

In addition, an aging indicator indicating an aging degree of the electrolyzer 10 can be derived from the measured parameters. For example, the aging indicator is calculated based on the measured electrolyzer voltage and current, and the hydrogen production rate. In an example, the control unit 40 calculates the aging indicator based on the measured parameters. In another example, the aging indicator is calculated at a computing device associated with the electrolyzer 10 and the control unit 40 receives the aging indicator from the computing device.

In an example, the measured parameters include variables related to an electrochemical reaction, diphasic flow and temperate dependence of the electrolyzer 10. An example of those variables is described in Table 2 below.

Table 2

| | | Variables |
|---|---|---|
| Electrochemical reaction | $P_{H_2}$ | Power of the produced hydrogen |
| | $P_{electrolyzer}$ | Power consumed by the electrolyzer |
| | $A$ | Sectional area of the anodic electrode or the cathodic electrode |
| | $i$ | Current density in the electrolyzer |
| | $i_{0,a}$ | Anodic exchange current density |
| | $I$ | Supplied current |
| | $U_{act}$ | Activation overvoltage of the electrolyzer |
| | $U_{ohm}$ | Ohmic overvoltage of the electrolyzer |
| | $U_{cell}$ | Voltage across the electrolyzer |
| Diphasic flow | $P_{pump}$ | Power consumed by the pump |
| | $\phi_a$ | Anodic void fraction of the elecctrolyzer |
| | $\phi_c$ | Cathodic void fraction of the electrolzer |
| | $v$ | Flow rate of the bubbles in the electrolyzer |
| | $Q$ | Gas production rate of the electrolyzer |
| | $\Delta x$ | Thickness of the bubble layer |
| Temperature dependence | $P_{heater}$ | Power consumed by the heater |
| | $T$ | Temperature of the electrolyte |

In an example, the measure parameters may also include operating parameters of the pump. The measured parameters may also include operating parameters of one or more of the heater, cooler and heat exchanger.

The set points comprise one or more of the following references that should be co-operated: a reference current for the power supply unit 20, a reference voltage for the power supply unit 20, a reference power for the power supply unit 20, a reference temperature for the at least of the heater 32, the cooler 33 and the heat exchanger 34, and a reference velocity for the pump 31. In an example, the control unit 40 determines one set point including all the determined references, for example, the determined set point includes the reference voltage, the reference temperature and the reference velocity. In another example, the control unit 40 determines a set of set points each of which includes a reference, for example, the determined set of set points includes a set point for setting the reference voltage, a set point for setting the reference temperature and set point for setting the reference velocity.

The set points including references are provided to corresponding components as orders. Each component may be associated with a controller (e.g., the controller can be seen as a low-level controller/subordinate controller of the control unit 40) for receiving and performing the order. For example, a set point for setting the reference velocity is provided to a pump controller associated with the pump and the pump controller controls the pump such that the pump pumps electrolyte into the electrolyzer 10 with the reference velocity. In this way, components of the PtH plant 100 can be coordinately controlled based on a co-operation according to the set point orders.

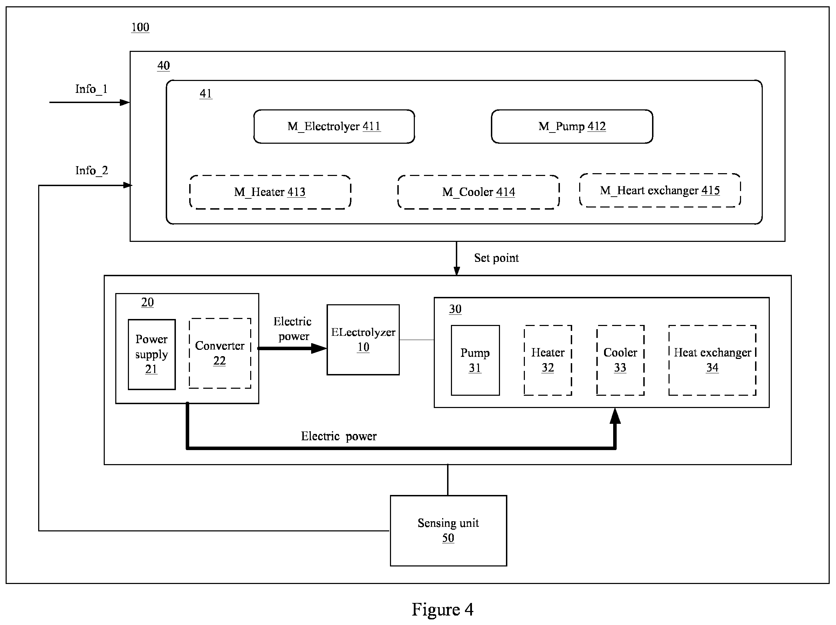

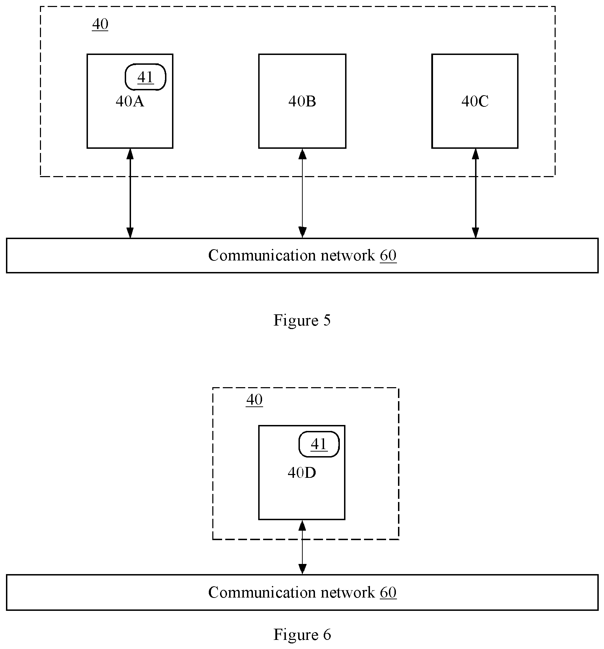

Figure 4 illustrates an implementation of the PtH plant 100 in Figure 3. As shown in Figure 4, the PtH plant 100 further includes sensing unit 50. The sensing unit 50 includes one or more sensors for sensing status of the electrolyzer 10, the power supply unit 20 and the auxiliary equipment 30 and generating the aforesaid measured parameters (i.e., Info_2). In addition, the PtH plant 100 can also include a communication network 60 (shown in Figures 5 and 6). Information can be exchanged between the control unit 40 and the electrolyzer 10, the power supply unit 20, the auxiliary equipment 30 or the sensing unit 50 via the communication network 60.

With reference to Figure 4, the power supply unit 20 includes a power supply 21, and optionally, includes a converter 22 coupled with the power supply 21. The converter 22 may include converters such as AC-DC, DC-DC, DC-AC-DC, and the like. The power supply 21 may include one or more power supplies. The converter 22 may include one or more converters. The selection of the converter 22 and its arrangement with the power supply 21 can be designed according to specific application scenarios. The auxiliary equipment 30 includes a pump 31, and optionally, includes at least one of a heater 32, a cooler 33, and a heat exchanger 34.

Continuing with reference to Figure 4, the at least one model 41 includes an electrolyzer model 411 and a pump model 412. The electrolyzer model 411 is a model of the electrolyzer 10 obtained by modelling the electrolyzer 10. The pump model 412 is a model of the pump obtained by modeling the pump 31. The at least one model 41 may further include a heater model 413, a cooler model 414 and a heat exchanger model 415. Similarly, the heater model 413 is a model of the heater 32 obtained by modelling the heater 32. The cooler model 414 is a model of the cooler 33 obtained by modelling the cooler 33. The heat exchanger model 415 is a model of the heat exchanger 34 obtained by modelling the heat exchanger 34. In an example, each of those models 411-415 is implemented as a sub-model of the model 41, and has a data interface for exchanging data with each other. Those models 411-415 perform co-processing for determining the one or more set points.

According to examples of the disclosure, the control unit 40 can be implemented as a distributed control unit or a central control unit.

Figure 5 illustrates an example of the distributed control unit 40. As shown in Figure 5, the control unit 40 includes a plurality of controllers 40A-40C each of which can communicate with the communication network 50. The at least one model 41 is stored in one of the controllers, for example, the controller 40A.

Figure 6 illustrates an example of the central control unit 40. As shown in Figure 6, the control unit 40 includes a central controller 40D. The at least one model 41 is stored in the central controller 40D.

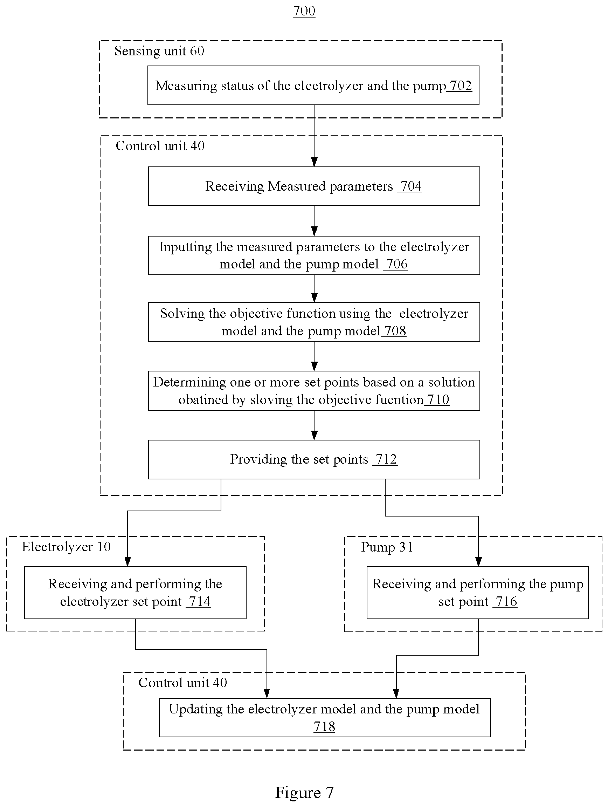

Figure 7 is a flowchart of a MEPT controlling process 700 according to an example of the disclosure. The MEPT controlling process 700 can be implemented by means of the control unit 40 and the PtH plant 100 and thus various features described above with reference to the control unit 40 and the PtH plant 100 are also applicable in the MEPT controlling process 700. In the MEPT control process 700, the energy input to the PtH plant 100 is distributed between the electrolyzer 10 and the pump 31 using the electrolyzer model 411 and the pump model 412 for achieving the maximum efficiency point of the PtH plant 100.

With reference to Figure 7, at block 702, the sensing unit 50 directly or indirectly measures status the electrolyzer 10 and the pump 31 and generates measured parameters. Examples of the measured parameters can refer to the above related descriptions.

At block 704, the control unit 40 receives the measured parameters.

At block 706, the control unit 40 inputs the measured parameters to the electrolyzer model 411 and the pump model 412. For example, the parameters related to the electrochemical reactions are input to the electrolyzer model 411 and the parameters related to the diphasic flow are input to the pump model 412.

At block 708, the control unit 40 calculates MEPT by solving the objective function using the electrolyzer model 411 and the pump model 412.

At block 710, the control unit 40 determines one or more set points for a coordinated operation of the electrolyzer 10 and the pump 31 based on a solution obtained by solving the objective function.

In an example, the electrolyzer model 411 and the pump model 412 perform co-processing and output the one or more set points including a reference velocity for the pump 31 and at least one of a reference power, a reference voltage and a reference current for the power supply unit 20.

In this example, the co-processing includes an optimization (Optimization_1) of the power distribution between the power supplied to the electrolyzer 10 and the power consumed by the pump 31. This optimization is made on the basis of considering the above described bubble detachment. For example, the co-processing is performed using a trade-off algorithm to distribute power between the electrolyzer 10 and the pump 31. The trade-off algorithm includes such a rule: improved flow rate of the electrolyte will relieve the bubble effect by accelerating the bubble detachment on the electrodes, but the energy consumption of the pump will be simultaneously increased.

At block 712, the control unit 40 provides the determined one or more set points to the power supply unit 20 and the pump 31.

At block 714, the power supply unit 20 receives the set point including at least one of the reference power, the reference voltage and the reference current and supplies power to the electrolyzer according to the received set point. For example, the power supply controller controls the power supply unit to supply power to the electrolyzer with the reference power.

At block 716, the pump 31 receives the set point including the reference velocity and pumps the electrolyte into the electrolyzer according to the received set point. For example, the pump controller controls the pump to pumps electrolyte into the electrolyzer with the reference velocity.

At block 718, the control unit 40 calculates an update of the electrolyzer model 411 and the pump model 412. In an example, the update includes an update of coefficients and/or constants of the electrolyzer model 411 and an update of coefficients and/or constants of the pump model 412.

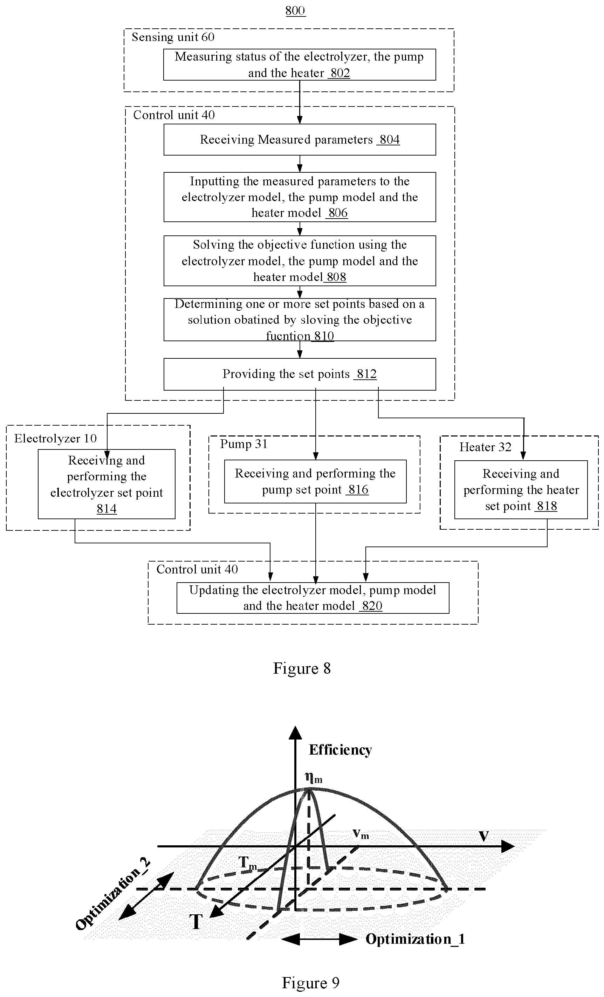

Figure 8 is a flowchart of a MEPT controlling process 800 according to another example of the disclosure. The MEPT controlling process 800 can be implemented by means of the control unit 40 and the PtH plant 100 and thus various features described above with reference to the control unit 40 and the PtH plant 100 are also applicable in the MEPT controlling process 800. In the MEPT control process 800, the energy input to the PtH plant 100 is distributed between the electrolyzer 10, the pump 31 and the heater 32 using the electrolyzer model 411, the pump model 412 and the heater model 413 for achieving the maximum efficiency point of the PtH plant 100.

With reference to Figure 8, at block 802, the sensing unit 50 directly or indirectly measures status the electrolyzer 10, the pump 31 and the heater 32, and generates measured parameters. Examples of the measured parameters can refer to the above related descriptions.

At block 804, the control unit 40 receives the measured parameters.

At block 806, the control unit 40 inputs the measured parameters to the electrolyzer model 411, the pump model 412 and the heater model 413. For example, parameters related to the electrochemical reactions are input to the electrolyzer model 411, parameters related to the diphasic flow are input to the pump model 412, and parameters related to the temperature dependence are input to the heater model 413.

At block 808, the control unit 40 calculates MEPT by solving the objective function using the electrolyzer model 411, the pump model 412 and the heater model 413.

At block 810, the control unit 40 determines one or more set points for a coordinated operation of the electrolyzer 10, the pump 31 and the heater 32 based on a solution obtained by solving the objective function.

In an example, the electrolyzer model 411, the pump model 412 and the heater model 413 perform co-processing and output the one or more set points including a reference velocity for the pump 31, at least one of a reference power, a reference voltage and a reference current for the power supply unit 20, and reference temperature for the heater 32.

In this example, in addition to the above-mentioned optimization (Optimization_1), the co-processing further includes another optimization (Optimization_2) of the power distribution between the power supplied to the electrolyzer 10 and the power consumed by the heater 32. This optimization is made on the basis of considering the above described thermodynamic point. For example, the co-processing is performed using a trade-off algorithm to distribute power between the electrolyzer 10 and the heater 32. The trade-off algorithm includes such a rule: the higher temperature tends to better activate the electrode and benefit the reaction thermodynamically, at the expense of higher energy consumption in the heater 32.

Figure 9 illustrates an example the two optimizations of the power distribution. As shown in Figure 9, the maximum efficiency point $\eta_m$ is achieved based on the two optimizations, i.e., Optimaization_1 and Optimization_2.

At block 812, the control unit 40 provides the determined one or more set points to the power supply unit 20, the pump 31 and the heater 32.

At block 814, the power supply unit 20 receives the set point including at least one of the reference power, the reference voltage and the reference current and supplies power to the electrolyzer according to the received set point. For example, the power supply controller controls the power supply unit to supply power to the electrolyzer with the reference power.

At block 816, the pump 31 receives the set point including the reference velocity and pumps the electrolyte into the electrolyzer according to the received set point. For example, the pump controller controls the pump to pumps electrolyte into the electrolyzer with the reference velocity.

At block 818, the heater 32 receives the set point including the reference temperature and adjusts the temperature of the electrolyte according to the received set point. For example, the heater controller controls the heater to adjust the temperature to the reference temperature.

At block 820, the control unit 40 calculates an update of the electrolyzer model 411, the pump model 412 and the heater model 413. In an example, the update includes an update of coefficients and/or constants of the electrolyzer model 411, an update of coefficients and/or constants of the pump model 412, and an update of coefficients and/or constants of the heater model 413.

It is noted that various modifications of power distribution such as power distribution among the electrolyzer, the pump, and the cooler, power distribution between the elecetrolyzer and the heater/cooler, and power distribution among the electrolyzer, the pump, the cooler, and the heat exchanger, can be implemented in a manner similar to that described above.

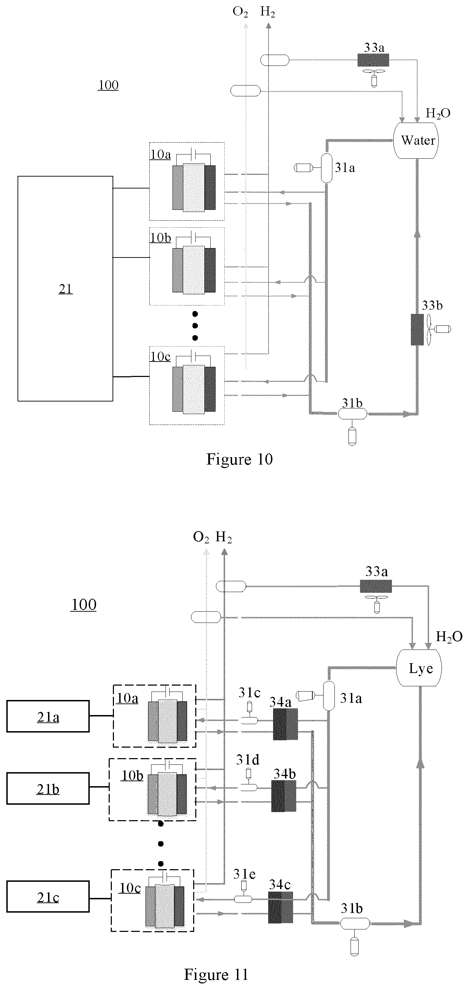

Figure 10 illustrates an implementation of the PtH 100 of Figure 4. As shown in Figure 10, the electrolyzer 10 includes set of electrolysis units 10a-10c each of which is coupled with and supplied by the power supply 21. The pump 31 includes a plurality of pumps 31a-31b arranged in a flow path of the electrolyte. The cooler 33 includes a plurality of coolers 33a-33b arranged in the flow path. Water is electrolyzed to produce hydrogen and oxygen.

Figure 11 illustrates another implementation of the PtH 100 of Figure 4. As shown in Figure 11, the power supply 21 includes a set of power supplies 21a-21c, and the electrolyzer 10 includes set of electrolysis units 10a-10c. Each electrolysis unit is couple with a corresponding power supply and supplied by the corresponding power supply. For example, the electrolysis unit 10a is coupled with the power supply 21a and is supplied by the power supply 21a; the electrolysis unit 10b is coupled with the power supply 21b and is supplied by the power supply 21b; and the electrolysis unit 10c is coupled with the power supply 21c and is supplied by the power supply 21c. The pump 31 includes a plurality of pumps 31a-31e arranged in the flow path of the electrolyte. One cooler 33a is arranged in the plow path. The heat exchanger 34 includes a plurality of heat exchangers 34a-34c arranged in the flow path. Lye is electrolyzed to generate hydrogen and oxygen.

It is noted that the above-mentioned configurations of the PtH plant 100 according to Figures 10 and 11 are only exemplary, and the PtH plant 100 can also be implemented in other various configurations with adaptive modifications. Those variations and modifications are within the scope of the disclosure.

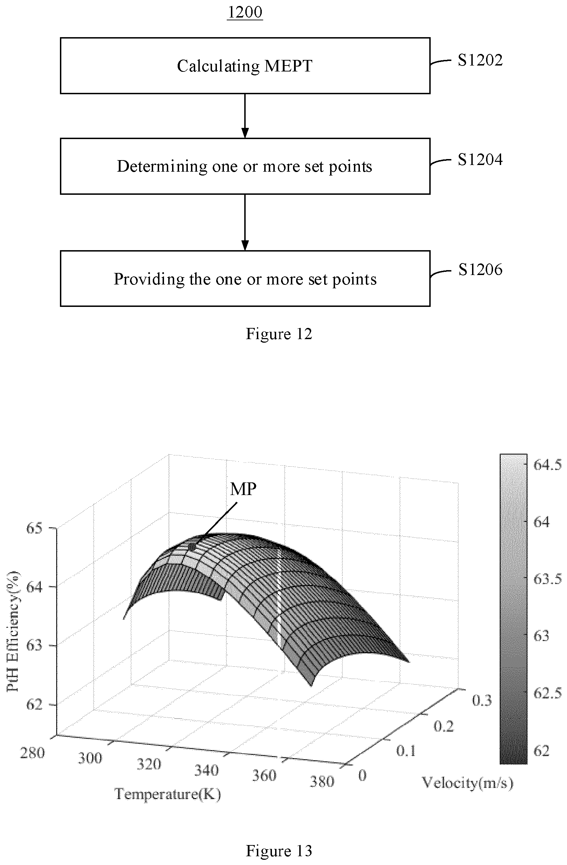

Figure 12 is flowchart of a control method 1200 for a PtH plant according to an example of the disclosure. The method 1200 can be implemented by means of the control unit 40 and thus various features described above with reference to the control unit 40 are also applicable to the method 1200.

With reference to Figure 12, in step S1202, the control unit calculates maximum efficiency point tracking of the PtH plant by solving an objective function having a predetermined hydrogen production rate of the PtH plant or a predetermined amount of energy input to the PtH plant using at least one model. The control unit 40 receives measured parameters indicative of status of components of the PtH plant as an input to the at least one model.

In step S1204, the control unit determines one or more set points for a coordinated operation of the components of the PtH plant based on a solution obtained by solving the objective function.

In step S1206, the control unit 40 provides the one or more set points to one or more of the components of the PtH plant to operate the PtH at the maximum efficiency point.

The disclosure also provides a non-transitory computer readable medium comprising MEPT instructions stored in a memory and executed by a processor to carry out any operation of the method 1200 for MEPT controlling of the PtH plant according to examples as described above.

In an example, the at least one model 41 is implemented as a multiphysics model having the above-mentioned variables and constants. Examples and constraints of the multiphysics model are described below, where the electrolyzer has been divided into N segments in y-direction, within which the variables are assumed constant. Definitions of parameters (e.g., variables and constants) can refer to Table 3 below.

Electrochemical reaction constraints

$$U_{cell} = U_{rev} + U_{act,k} + U_{ohm,k} \qquad (3)$$

$$U_{act,k} = \frac{RT}{2F} \sinh^{-1}(\frac{i_k}{2i_{0,a}(1-\phi_{a,k})}) + \frac{RT}{F} \sinh^{-1}(\frac{i_k}{2i_{0,c}(1-\phi_{c,k})}) \qquad (4)$$

$$U_{ohm,k} = i_k A_k (\frac{2}{\sigma_{cata} h_{cata}} + \frac{1}{\sigma_{mem} h_{mem}}) \qquad (5)$$

$$\sum_{k=1}^{N} i_k \Delta y y_{max} = I \qquad (6)$$

$$1.23(V) \leq U_{cell} \qquad (7)$$

Diphasic flow constrains

$$\rho_{O_2} \frac{\phi_{a,k} - \phi_{a,k-1}}{\Delta y} v = Q_{a,k} \qquad (8)$$

$$\rho_{H_2} \frac{\phi_{c,k} - \phi_{c,k-1}}{\Delta y} v = Q_{c,k} \qquad (9)$$

$$Q_{a,k} = \frac{i_k}{4F} M_{O_2} / \Delta x \qquad (10)$$

$$Q_{c,k} = \frac{i_k}{2F} M_{H_2} / \Delta x \qquad (11)$$

$$v = \frac{4v_{in}}{l^2}(-(\Delta x)^2 + l\Delta x) \qquad (12)$$

$$v = \frac{4v_{in}}{l^2}(-(\Delta x)^2 + l\Delta x) \qquad (13)$$

$$0 \le v_{in} \le \frac{2000\mu}{\rho x} \qquad (14)$$

Temperature dependence constrains

$$i_0 = i_{0,ref} e^{[-\frac{E_{exc}}{R}(\frac{1}{T} - \frac{1}{T_{ref}})]} \qquad (15)$$

$$298.15(K) \le T \le 368.15(K) \qquad (16)$$

Table 3

| | | Variables | | Constants |
|---|---|---|---|---|
| Electrochemical reaction | $P_{H_2}$ | Power of the produced hydrogen | $h_{channel}$ | Channel width |
| | $P_{electrolyzer}$ | Power consumed by the electrolyzer | $h_{cata}$ | Catalyst thickness |
| | $\Delta y$ | Length of each segment | $h_{mem}$ | Membrane thickness |
| | $A_k$ | Sectional area of k-th segment | $y_{max}$ | Height of the electrolyzer |
| | $i_k$ | Current density of the k-th segment | $F$ | Faraday constant |
| | $i_{0,a}$ | Anodic exchange current density | $i_{0,c}$ | Cathodic exchange current density |
| | $I$ | Supplied current | $\sigma_{cata}$ | Conductivity of the catalyst |
| | $U_{act,k}$ | Activation overvoltage of k-th segment | $\sigma_{mem}$ | Conductivity of the membrane |
| | $U_{ohm,k}$ | Ohmic overvoltage of k-th segment | $U_{rev}$ | Reversible voltage |
| | $U_{cell}$ | Voltage of the electrolyzer | $n$ | Number of the cells in stack |
| Diphasic flow | $P_{pump}$ | Power consumed by the pump | $\rho_{KOH}$ | Density of the electrolyte |
| | $\phi_{a,k}$ | Anodic void fraction of k-th segment | $\rho_{H2}$ | Density of hydrogen |
| | $\phi_{c,k}$ | Cathodic void fraction of k-th segment | $\rho_{O2}$ | Density of oxygen |
| | $v$ | Flow rate of the bubbles | $\mu_{KOH}$ | Viscosity of the electrolyte |
| | $Q_k$ | Gas production rate at k-th segment | $M_{H2}$ | Molar mass of hydrogen |
| | $\Delta x$ | Thickness of the bubble layer | $M_{O2}$ | Molar mass of oxygen |
| Temperature dependence | $P_{heater}$ | Power consumed by the heater | $h$ | Heat transfer coefficient |
| | $T$ | Temperature | $A$ | Area for heat transfer |
| | | | $T_{ref}$ | Reference temperature |

The proposed MEPT controlling can be verified by means of simulation results. Figure 13 is a simulation figure showing a coordination of the temperature and the velocity for the maximum PtH efficiency. Figure 13 shows that there exists the coordination among the pump, the heater and the electrolyzer. With the coordination of the pump and the heater, the optimal operating parameters can be acquired at the maximum efficiency point MP.

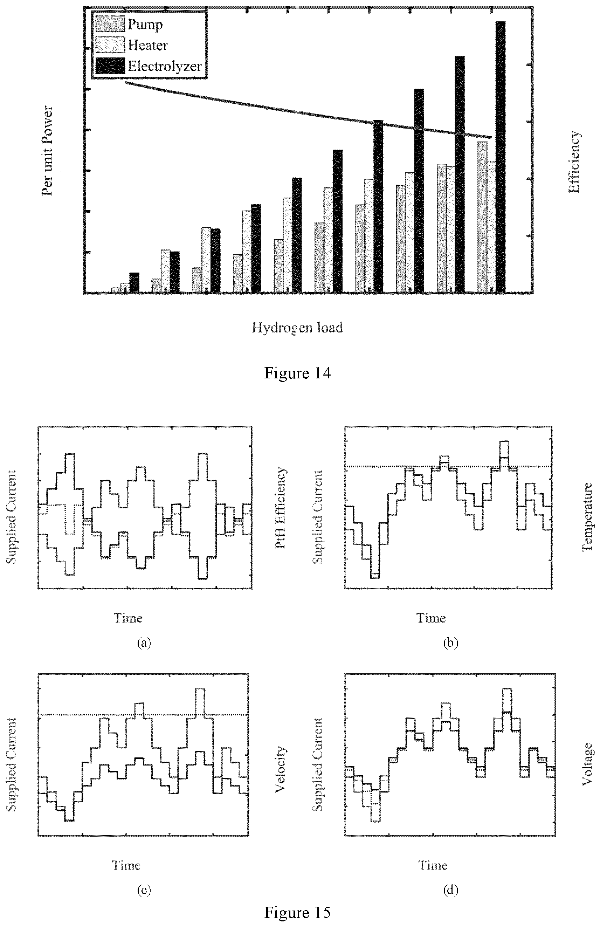

Figures 14 and 15 show such simulations that can be applied to a large industrial unit (e.g., a large-scale industrial electrolyzer) as well as a small industrial unit (e.g., a small-scale industrial electrolyzer). In Figures 14 and 15, the coordinate axes are shown without specific values. The value of each axis increases along the axis within a range corresponding to the applied scenario. For example, in the scenario where the simulation of Figure 14 is applied to a small industrial unit, the value of the horizontal axis increases along the horizontal axis and is from 1A to 10A. In the scenario where the simulation of Figure 14 is applied to a large industrial unit, the value of the horizontal axis increases along the horizontal axis and is from 1000A to 5000A.

Figure 14 is a simulation figure showing the maximum efficiency and the optimized power of the pump, the heater and the electrolyzer with different supplied current. As shown in Figure 14, the maximum efficiency point of the power-to-hydrogen plant can be tracked with different supplied current. This is especially applicable to the PtH plant that takes energy from fluctuating renewable energy source.

Figure 15 is a simulation figure showing the maximum efficiency point of efficiency (Figure 15(a)), temperature (Figure 15(b)), velocity (Figure 15(c)), voltage (Figure 15(d)) with fluctuating supplied current, where the solid line represents the MEPT control, and the dashed line represents a predetermined value used as a comparison example. It is seen that the MEPT controlling can also be applied to the scenario where the dynamic supplied current is required. Figure 15(a) shows the optimal efficiency, as well as the operating parameters of the PtH plant, can be acquired timely with the model when the supplied current is fluctuating. Figure 15(b) and (c) are the optimal temperature and velocity of the electrolyte. Compared with the comparison example represented by the dashed line, the optimal temperature and velocity deviate the most from the comparison example of the dashed line when the supplied current is low, this can help explain the highest incensement in efficiency shown in Figure 1515(a).

It is noted that all the operations described above are merely exemplary, and the disclosure is not limited to any operations or sequence orders of these operations.

Processors are described in connection with various systems and methods. These processors can be implemented using electronic hardware, computer software, or any combination thereof. Whether these processors are implemented as hardware or software will depend on the specific application and the overall design constraints imposed on the system. By way of example, a processor, any portion of a processor, or any combination of processors presented in this disclosure may be implemented as a microprocessor, a micro-controller, a digital signal processor (DSP), a field programmable gate array (FPGA), a programmable logic device (PLD), state machine, gate logic, discrete hardware circuitry, and other suitable processing components configured to perform the various functions described in this disclosure. The functions of a processor, any portion of a processor, or any combination of processors presented in this disclosure may be implemented as software executed by a microprocessor, a micro-controller, a DSP, or other suitable platforms.

## Claims

1. A control unit (40) for a Power-to-Hydrogen (PtH) plant (100), the control unit (40) comprising at least one model (41) and being configured to:

   calculate maximum efficiency point tracking of the PtH plant by solving an objective function having a predetermined hydrogen production rate of the PtH plant using the at least one model, wherein the control unit receives measured parameters indicative of status of components of the PtH plant as an input to the at least one model;
   determine one or more set points for a coordinated operation of the components of the PtH plant based on a solution obtained by solving the objective function; and
   provide the one or more set points to one or more of the components of the PtH plant to operate the PtH at the maximum efficiency point,
   wherein the objective function comprises a maximum ratio corresponding to the maximum efficiency point of the PtH plant, and
   wherein the maximum ratio is a ratio of hydrogen energy corresponding to the predetermined hydrogen production rate to a minimum amount of energy required by the PtH plant.

2. The control unit (40) of any one of claims 1, wherein the components of the PtH plant comprise an electrolyzer (10), an auxiliary equipment (30) coupled with the electrolyzer, and a power supply unit (20) for supplying power to the electrolyzer and the auxiliary equipment, and the auxiliary equipment comprises a pump (31), and at least one of a heater (32), a cooler (33) and a heat exchanger (34); and
   wherein the one or more set points comprise one or more of the following references, and the components of the PtH plant are coordinately controlled based on corresponding references:

   - a reference current for the power supply unit;
   - a reference voltage for the power supply unit;
   - a reference power for the power supply unit;
   - a reference temperature for the at least of heater, cooler and heat exchanger, and
   - a reference velocity for the pump.

3. The control unit (40) of claim 2, wherein the at least one model (41) comprises co-processing models for the coordinated operation of the components; and
   wherein the co-processing models comprises an electrolyzer model and a pump model, and optionally, the co-processing models further comprises one or more of a heater model, a cooler model, and a heat exchanger model.

4. The control unit (40) of claim 3, wherein determining the one or more set points comprises:
   calculating, at the co-processing models, a power distribution of the energy input to the PtH plant between power supplied to the electrolyzer and power consumed by the auxiliary equipment.

5. The control unit (40) of claim 4, wherein calculating the power distribution comprises calculating, at the electrolyzer model and the pump model, an optimization of the power distribution between the power supplied to the electrolyzer and the power consumed by the pump, and optionally, the optimization is associated with bubble detachment in the electrolyzer.

6. The control unit (40) of claim 4, wherein calculating the power distribution comprises calculating, at the electrolyzer model and one or more of a heater model, a cooler model, and a heat exchanger model, an optimization of the power distribution between the power supplied to the electrolyzer and the power consumed by one or more of the heater, cooler and heat exchanger, and optionally, the optimization is associated with benefiting the reaction thermodynamically in the electrolyzer.

7. The control unit (40) of claim 2, wherein the measured parameters are variables of the at least one model, and comprise parameters related to an electrochemical reaction, diphasic flow and temperate dependence of the electrolyzer,
and optionally, the measured parameters further comprise parameters related to operating status of the auxiliary equipment.

8. The control unit (40) of claim 1, wherein the measured parameters comprise:

   - a current in the electrolyzer;
   - a voltage across the electrolyzer;
   - a velocity of electrolyte in the electrolyte; and
   - a temperature of the electrolyte in the electrolyte.

9. The control unit (40) of any one of claims 1-8, wherein the control unit is further configured to:

   calculate an update of the at least one model based on the measured parameters;
   and optionally, the update of the at least one model comprises an update of coefficients and/or constants of the at least one model.

10. A PtH plant (100) comprising:

    an electrolyzer (10) for generating hydrogen;an auxiliary equipment (30) coupled with the electrolyzer;
    a power supply unit (20) for supplying power to the electrolyzer (10) and the auxiliary equipment (30);
    a sensing unit (50) configured to measure status of the electrolyzer (10), the power supply unit (20) and the auxiliary equipment (30), and generate the measured parameters, and
    a control unit (40) as defined in any of claims 1 to 9 in communication with the electrolyzer (10), the power supply unit (20), and the auxiliary equipment (30).

11. The PtH plant (100) of claim 10, wherein the power supply unit comprises a power supply, and the electrolyzer comprises a set of electrolysis units each of which is coupled with the power supply and supplied by the power supply.

12. The PtH plant (100) of claim 10, wherein the power supply unit comprises a set of power supplies, and the electrolyzer comprises a set of electrolysis units each of which is coupled with a corresponding power supply of the power supplies and supplied by the corresponding power supply.

13. The PtH plant (100) of any one of claims 11-12, wherein the auxiliary equipment (30) comprises a pump (31), and at least one of a heater (32), a cooler (33) and a heat exchanger (34), and

    wherein the pump is configured to pump electrolyte into the electrolyzer based on a set point corresponding to a reference velocity, and
    wherein at least one of the heater, the cooler and the heat exchanger is configured to adjust the temperature of the electrolyte based on a set point corresponding to a reference temperature.

14. The PtH plant (100) of any one of claims 11-13, wherein the power supply unit comprises one or more power supplies, and one or more converters, and

wherein the power supply unit is configured to supply the electrolyzer based on a set point corresponding to at least one of a reference current, a reference voltage, and a reference power.

15. The PtH plant (100) of any one of claims 11-14, wherein the auxiliary equipment (30) is integrated with the electrolyzer (10).

16. A control method for a Power-to-Hydrogen (PtH) plant (100) comprising:

calculating maximum efficiency point tracking of the PtH plant by solving an objective function having a predetermined hydrogen production rate of the PtH plant using at least one model, wherein the control unit receives measured parameters indicative of status of components of the PtH plant as an input to the at least one model;
determining one or more set points for a coordinated operation of the components of the PtH plant based on a solution obtained by solving the objective function; and
providing the one or more set points to one or more of the components of the PtH plant to operate the PtH at the maximum efficiency point, wherein the control unit (40) is as defined in any of claims 1 to 9.

**Patentansprüche**

1. Steuereinheit (40) für eine Power-to-Hydrogen (PtH)-Anlage (100), wobei die Steuereinheit (40) mindestens ein Modell (41) umfasst und zu Folgendem konfiguriert ist:

Berechnen einer maximalen Effizienzpunktverfolgung der PtH-Anlage durch Lösen einer Zielfunktion mit einer vorbestimmten Wasserstoffproduktionsrate der PtH-Anlage unter Verwendung des mindestens einen Modells, wobei die Steuereinheit gemessene Parameter empfängt, die den Status von Komponenten der PtH-Anlage als eine Eingabe in das mindestens eine Modell angeben;
Bestimmen eines oder mehrerer Sollwerte für einen koordinierten Betrieb der Komponenten der PtH-Anlage basierend auf einer Lösung, die durch Lösen der Zielfunktion erhalten wird; und
Bereitstellen des einen oder der mehreren Sollwerte an eine oder mehrere der Komponenten der PtH-Anlage, um die PtH an dem maximalen Effizienzpunkt zu betreiben,
wobei die Zielfunktion ein maximales Verhältnis umfasst, das dem maximalen Effizienzpunkt der PtH-Anlage entspricht, und
wobei das maximale Verhältnis ein Verhältnis von Wasserstoffenergie, das der vorbestimmten Wasserstoffproduktionsrate entspricht, zu einer minimalen Energiemenge ist, die von der PtH-Anlage benötigt wird.

2. Steuereinheit (40) nach einem der Ansprüche 1, wobei die Komponenten der PtH-Anlage einen Elektrolyseur (10), eine Hilfsausrüstung (30), die mit dem Elektrolyseur gekoppelt ist, und eine Leistungsversorgungseinheit (20) zum Zuführen von Leistung zu dem Elektrolyseur und der Hilfsausrüstung umfassen und die Hilfsausrüstung eine Pumpe (31) und mindestens eines von einem Heizer (32), einem Kühler (33) und einem Wärmetauscher (34) umfasst; und wobei der eine oder die mehreren Sollwerte eine oder mehrere der folgenden Referenzen umfassen und die Komponenten der PtH-Anlage basierend auf entsprechenden Referenzen koordiniert gesteuert werden:

- einen Referenzstrom für die Leistungsversorgungseinheit;
- eine Referenzspannung für die Leistungsversorgungseinheit;
- eine Bezugsleistung für die Leistungsversorgungseinheit;
- eine Referenztemperatur für mindestens Heizer, Kühler und Wärmetauscher, und
- eine Referenzgeschwindigkeit für die Pumpe.

3. Steuereinheit (40) nach Anspruch 2, wobei das mindestens eine Modell (41) Co-Verarbeitungsmodelle für den koordinierten Betrieb der Komponenten umfasst; und
wobei die Co-Verarbeitungsmodelle ein Elektrolyseurmodell und ein Pumpenmodell umfassen, und optional die Co-Verarbeitungsmodelle außerdem ein oder mehrere Heizermodelle, ein Kühlermodell und ein Wärmetauschermodell umfassen.

4. Steuereinheit (40) nach Anspruch 3, wobei das Bestimmen des einen oder der mehreren Sollwerte Folgendes umfasst:
Berechnen, an den Co-Verarbeitungsmodellen, einer Leistungsverteilung der in die PtH-Anlage eingegebenen Energie zwischen der dem Elektrolyseur zugeführten Leistung und der von der Hilfsausrüstung verbrauchten Leistung.

5. Steuereinheit (40) nach Anspruch 4, wobei das Berechnen der Leistungsverteilung das Berechnen, an dem Elektrolyseurmodell und dem Pumpenmodell, einer Optimierung der Leistungsverteilung zwischen der dem Elektrolyseur zugeführten Leistung und der von der Pumpe verbrauchten Leistung umfasst und optional die Optimierung mit einer Blasenablösung in dem Elektrolyseur assoziiert ist.

6. Steuereinheit (40) nach Anspruch 4, wobei das Berechnen der Leistungsverteilung das Berechnen einer Optimierung der Leistungsverteilung zwischen der Leistung, die dem Elektrolyseur zugeführt wird, und der Leistung, die durch einen oder mehrere von dem Heizer, dem Kühler und dem Wärmetauscher verbraucht wird, an dem Elektrolyseurmodell und einem oder mehreren von einem Heizermodell, einem Kühlermodell und einem Wärmetauschermodell umfasst und optional die Optimierung mit dem Nutzen der Reaktion thermodynamisch in dem Elektrolyseur assoziiert ist.

7. Steuereinheit (40) nach Anspruch 2, wobei die gemessenen Parameter Variablen des mindestens einen Modells sind und Parameter umfassen, die sich auf eine elektrochemische Reaktion, einen zweiphasigen Fluss und eine Temperaturabhängigkeit des Elektrolyseurs beziehen,
und optional die gemessenen Parameter auch Parameter umfassen, die sich auf den Betriebszustand der Hilfsausrüstung beziehen.

8. Steuereinheit (40) nach Anspruch 1, wobei die gemessenen Parameter Folgendes umfassen:

   - einen Strom im Elektrolyseur;
   - eine Spannung über dem Elektrolyseur;
   - eine Geschwindigkeit des Elektrolyten im Elektrolyten; und
   - eine Temperatur des Elektrolyten im Elektrolyten.

9. Steuereinheit (40) nach einem der Ansprüche 1-8, wobei die Steuereinheit ferner zu Folgendem konfiguriert ist:

   Berechnen einer Aktualisierung des mindestens einen Modells auf der Grundlage der gemessenen Parameter;
   und optional umfasst die Aktualisierung des mindestens einen Modells eine Aktualisierung der Koeffizienten und/oder Konstanten des mindestens einen Modells.

10. PtH-Anlage (100), die Folgendes umfasst:

    einen Elektrolyseur (10) zum Erzeugen von Wasserstoff; eine mit dem Elektrolyseur gekoppelte Hilfsausrüstung (30);
    eine Leistungsversorgungseinheit (20) für die Leistungsversorgung des Elektrolyseurs (10) und der Hilfsausrüstung (30);
    eine Sensoreinheit (50), die so konfiguriert ist, dass sie den Zustand des Elektrolyseurs (10), der Leistungsversorgungseinheit (20) und der Hilfsausrüstung (30) misst und die gemessenen Parameter erzeugt, und
    eine Steuereinheit (40) nach einem der Ansprüche 1-9, die mit dem Elektrolyseur (10), der Leistungsversorgungseinheit (20) und der Hilfsausrüstung (30) verbunden ist.

11. PtH-Anlage (100) nach Anspruch 10, wobei die Leistungsversorgungseinheit eine Leistungsversorgung umfasst und der Elektrolyseur einen Satz von Elektrolyseeinheiten umfasst, von denen jede mit der Leistungsversorgung gekoppelt ist und von der Leistungsversorgung versorgt wird.

12. PtH-Anlage (100) nach Anspruch 10, wobei die Leistungsversorgungseinheit einen Satz von Leistungsversorgungen umfasst, und der Elektrolyseur einen Satz von Elektrolyseeinheiten umfasst, von denen jede mit einer entsprechenden Leistungsversorgung der Leistungsversorgungen gekoppelt ist und von der entsprechenden Leistungsversorgung versorgt wird.

13. PtH-Anlage (100) nach einem der Ansprüche 11-12, wobei die Hilfsausrüstung (30) eine Pumpe (31) und mindestens einen von einem Heizer (32), einem Kühler (33) und einem Wärmetauscher (34) umfasst, und

    wobei die Pumpe so konfiguriert ist, dass sie Elektrolyt in den Elektrolyseur pumpt, basierend auf einem Sollwert, der einer Referenzgeschwindigkeit entspricht, und

wobei mindestens eine der Komponenten Heizung, Kühler und Wärmetauscher so konfiguriert ist, dass sie die Temperatur des Elektrolyten auf der Grundlage eines einer Referenztemperatur entsprechenden Sollwerts einstellt.

14. PtH-Anlage (100) nach einem der Ansprüche 11-13, wobei die Leistungsversorgungseinheit eine oder mehrere Leistungsversorgungen und einen oder mehrere Umrichter umfasst, und

wobei die Leistungsversorgungseinheit so konfiguriert ist, dass sie den Elektrolyseur auf der Grundlage eines Sollwerts versorgt, der mindestens einem von einem Referenzstrom, einer Referenzspannung und einer Referenzleistung entspricht.

15. PtH-Anlage (100) nach einem der Ansprüche 11-14, wobei die Hilfsausrüstung (30) in den Elektrolyseur (10) integriert ist.

16. Kontrollverfahren für eine Power-to-Hydrogen (PtH)-Anlage (100), das Folgendes umfasst:

Berechnen einer maximalen Effizienzpunktverfolgung der PtH-Anlage durch Lösen einer Zielfunktion mit einer vorbestimmten Wasserstoffproduktionsrate der PtH-Anlage unter Verwendung mindestens eines Modells, wobei die Steuereinheit gemessene Parameter empfängt, die den Status von Komponenten der PtH-Anlage als eine Eingabe in das mindestens eine Modell angeben; Bestimmen eines oder mehrerer Sollwerte für einen koordinierten Betrieb der Komponenten der PtH-Anlage auf der Grundlage einer durch Lösen der Zielfunktion erhaltenen Lösung; und

Bereitstellen des einen oder der mehreren Sollwerte für eine oder mehrere der Komponenten der PtH-Anlage, um die PtH-Anlage an dem maximalen Effizienzgrad zu betreiben, wobei die Steuereinheit (40) wie in einem der Ansprüche 1 bis 9 definiert ist.

**Revendications**

1. Unité de commande (40) d'une centrale électrique à hydrogène (100) (PtH), l'unité de commande (40) comprenant au moins un modèle (41) et étant configurée pour :

calculer le suivi du point d'efficacité maximale de la centrale PtH en résolvant une fonction d'objectif ayant un débit prédéterminé de production d'hydrogène de la centrale PtH à l'aide de l'au moins un modèle, où l'unité de commande reçoit des paramètres mesurés indicatifs de l'état des composants de la centrale PtH en tant qu'entrée pour l'au moins un modèle ; déterminer un ou plusieurs points de consigne pour un fonctionnement coordonné des composants de la centrale PtH sur la base d'une solution obtenue par résolution de la fonction d'objectif ; et

fournir les un ou plusieurs points de consigne à un ou plusieurs des composants de la centrale PtH pour faire fonctionner la centrale PtH au point d'efficacité maximale, où la fonction d'objectif comprend un rapport maximal correspondant au point d'efficacité maximale de la centrale PtH, et

où le rapport maximal est un rapport entre l'énergie d'hydrogène correspondant au débit prédéterminé de production d'hydrogène et une quantité minimale d'énergie requise par la centrale PtH.

2. Unité de commande (40) selon la revendication 1, dans laquelle les composants de la centrale PtH comprennent un électrolyseur (10), un équipement auxiliaire (30) couplé à l'électrolyseur, et une unité d'alimentation en énergie (20) pour fournir de l'énergie à l'électrolyseur et à l'équipement auxiliaire, et l'équipement auxiliaire comprend une pompe (31), et au moins un élément parmi un élément chauffant (32), un refroidisseur (33) et un échangeur de chaleur (34) ; et où les un ou plusieurs points de consigne comprennent une ou plusieurs des références suivantes, et les composants de la centrale PtH sont contrôlés de manière coordonnée sur la base de références correspondantes :

- un courant de référence de l'unité d'alimentation en énergie,
- une tension de référence de l'unité d'alimentation en énergie,
- une puissance de référence de l'unité d'alimentation en énergie,
- une température de référence pour l'au moins un élément parmi un élément chauffant, un refroidisseur et un échangeur de chaleur, et
- une vitesse de référence pour la pompe.

3. Unité de commande (40) selon la revendication 2, dans laquelle l'au moins un modèle (41) comprend des modèles de co-traitement pour le fonctionnement coordonné des composants; et
dans laquelle les modèles de co-traitement comprennent un modèle d'électrolyseur et un modèle de pompe et, éventuellement, les modèles de co-traitement comprennent en outre un ou plusieurs modèles parmi un modèle d'élément chauffant, un modèle de refroidisseur et un modèle d'échangeur de chaleur.

4. Unité de commande (40) selon la revendication 3, dans laquelle la détermination des un ou plusieurs points de consigne comprend l'étape suivante :
calculer, aux niveau des modèles de co-traitement, une répartition de la puissance de l'énergie fournie à la centrale PtH entre la puissance fournie à l'électrolyseur et la puissance consommée par les équipements auxiliaires.

5. Unité de commande (40) selon la revendication 4, dans laquelle le calcul de la distribution de puissance comprend le calcul, au niveau du modèle d'électrolyseur et du modèle de pompe, d'une optimisation de la distribution de puissance entre la puissance fournie à l'électrolyseur et la puissance consommée par la pompe et, facultativement, l'optimisation est associée au détachement de bulles dans l'électrolyseur.

6. Unité de commande (40) selon la revendication 4, dans laquelle le calcul de la distribution de puissance comprend le calcul, au niveau du modèle d'électrolyseur et d'un ou plusieurs modèles parmi un modèle d'élément chauffant, un modèle de refroidisseur et un modèle d'échangeur de chaleur, d'une optimisation de la distribution de puissance entre la puissance fournie à l'électrolyseur et la puissance consommée par un ou plusieurs éléments parmi l'élément chauffant, le refroidisseur et l'échangeur de chaleur et, facultativement, l'optimisation est associée au bénéfice thermodynamique de la réaction dans l'électrolyseur.

7. Unité de commande (40) selon la revendication 2, dans laquelle les paramètres mesurés sont des variables de l'au moins un modèle, et comprennent des paramètres liés à une réaction électrochimique, un écoulement diphasique et une dépendance à la température de l'électrolyseur,
et éventuellement, les paramètres mesurés comprennent en outre des paramètres liés à l'état de fonctionnement de l'équipement auxiliaire.

8. Unité de commande (40) selon la revendication 1, dans laquelle les paramètres mesurés comprennent :

   - un courant dans l'électrolyseur ;
   - une tension à travers l'électrolyseur ;
   - une vitesse d'électrolyte dans l'électrolyte ; et
   - une température de l'électrolyte dans l'électrolyte.

9. Unité de commande (40) selon l'une quelconque des revendications 1 à 8, l'unité de commande étant en outre configurée pour :

   calculer une mise à jour de l'au moins un modèle en fonction des paramètres mesurés ;
   et optionnellement, la mise à jour de l'au moins un modèle comprend une mise à jour de coefficients et/ou de constantes de l'au moins un modèle.

10. Centrale PtH (100) comprenant :

   un électrolyseur (10) pour générer de l'hydrogène ; un équipement auxiliaire (30) couplé à l'électrolyseur ;
   une unité d'alimentation en énergie (20) pour alimenter en énergie l'électrolyseur (10) et l'équipement auxiliaire (30) ;
   une unité de détection (50) configurée pour mesurer l'état de l'électrolyseur (10), de l'unité d'alimentation en énergie (20) et de l'équipement auxiliaire (30), et générer les paramètres mesurés, et
   une unité de commande (40) telle que définie dans l'une quelconque des revendications 1 à 9, en communication avec l'électrolyseur (10), l'unité d'alimentation en énergie (20) et l'équipement auxiliaire (30).

11. Centrale PtH (100) selon la revendication 10, dans laquelle l'unité d'alimentation en énergie comprend une alimentation électrique, et l'électrolyseur comprend un ensemble d'unités d'électrolyse dont chacune est couplée à l'alimentation électrique et alimentée par l'alimentation électrique.

12. Centrale PtH (100) selon la revendication 10, dans laquelle l'unité d'alimentation en énergie comprend un ensemble d'alimentations électriques, et l'électrolyseur comprend un ensemble d'unités d'électrolyse dont chacune est couplée à une alimentation électrique correspondante des alimentations électriques et alimentée par l'alimentation électrique correspondante.

13. Centrale PtH (100) selon l'une quelconque des revendications 11 et 12, dans laquelle l'équipement auxiliaire (30) comprend une pompe (31), et au moins l'un d'un élément chauffant (32), d'un refroidisseur (33) et d'un échangeur de chaleur (34), et

où la pompe est configurée pour pomper de l'électrolyte dans l'électrolyseur sur la base d'un point de consigne correspondant à une vitesse de référence, et
où au moins l'un parmi l'élément chauffant, le refroidisseur et l'échangeur de chaleur est configuré pour ajuster la température de l'électrolyte sur la base d'un point de consigne correspondant à une température de référence.

14. Centrale PtH (100) selon l'une quelconque des revendications 11 à 13, l'unité d'alimentation en énergie comprenant une ou plusieurs alimentations, et un ou plusieurs convertisseurs, et
où l'unité d'alimentation en énergie est configurée pour alimenter l'électrolyseur sur la base d'un point de consigne correspondant à au moins l'un d'un courant de référence, d'une tension de référence et d'une puissance de référence.

15. Centrale PtH (100) selon l'une quelconque des revendications 11 à 14, dans laquelle l'équipement auxiliaire (30) est intégré à l'électrolyseur (10).

16. Procédé de commande pour une centrale électrique à hydrogène (PtH) (100), le procédé comprenant les étapes suivantes :

calculer le suivi du point d'efficacité maximale de la centrale PtH en résolvant une fonction d'objectif ayant un débit prédéterminé de production d'hydrogène de la centrale PtH à l'aide d'au moins un modèle, où l'unité de commande reçoit des paramètres mesurés indicatifs de l'état des composants de la centrale PtH en tant qu'entrée pour l'au moins un modèle ;
déterminer un ou plusieurs points de consigne pour un fonctionnement coordonné des composants de la centrale PtH sur la base d'une solution obtenue par résolution de la fonction d'objectif ; et
fournir les un ou plusieurs points de consigne à un ou plusieurs des composants de la centrale PtH pour faire fonctionner la centrale PtH au point d'efficacité maximale, l'unité de commande (40) étant telle que définie dans l'une quelconque des revendications 1 à 9.

Figure 1

(a)                                        (b)

End Plate            Electrode            Membrane

Figure 2

Figure 3

Figure 4

40

41
40A

40B

40C

Communication network 60

Figure 5

40

41
40D

Communication network 60

Figure 6

700

Sensing unit 60

Measuring status of the electrolyzer and the pump 702

Control unit 40

Receiving Measured parameters 704

Inputting the measured parameters to the electrolyzer model and the pump model 706

Solving the objective function using the electrolyzer model and the pump model 708

Determining one or more set points based on a solution obatined by sloving the objective fucntion 710

Providing the set points 712

Electrolyzer 10

Receiving and performing the electrolyzer set point 714

Pump 31

Receiving and performing the pump set point 716

Control unit 40

Updating the electrolyzer model and the pump model 718

Figure 7

800

**Sensing unit 60**

Measuring status of the electrolyzer, the pump and the heater 802

**Control unit 40**

Receiving Measured parameters 804

Inputting the measured parameters to the electrolyzer model, the pump model and the heater model 806

Solving the objective function using the electrolyzer model, the pump model and the heater model 808

Determining one or more set points based on a solution obatined by sloving the objective fucntion 810

Providing the set points 812

**Electrolyzer 10**

Receiving and performing the electrolyzer set point 814

**Pump 31**

Receiving and performing the pump set point 816

**Heater 32**

Receiving and performing the heater set point 818

**Control unit 40**

Updating the electrolyzer model, pump model and the heater model 820

Figure 8

Efficiency

$\eta_m$

$v_m$

V

Optimization_2

$T_m$

T

Optimization_1

Figure 9

O₂  H₂

Figure 10

O₂ H₂

Figure 11

1200

```
┌─────────────────────────────────────┐
│                                      │  ─ S1202
│          Calculating MEPT            │
│                                      │
└─────────────────────────────────────┘
                   │
                   ▼
┌─────────────────────────────────────┐
│                                      │  ─ S1204
│   Determining one or more set points │
│                                      │
└─────────────────────────────────────┘
                   │
                   ▼
┌─────────────────────────────────────┐
│                                      │  ─ S1206
│  Providing the one or more set points│
│                                      │
└─────────────────────────────────────┘
```

Figure 12

Figure 13

Figure 14

(a)

(b)

(c)

(d)

Figure 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021156039 A1

- AT 524659 A4

**Non-patent literature cited in the description**

- **ZHAO DONGQI et al.** Dynamic hierarchical modeling and control strategy of high temperature proton exchange electrolyzer cell system. *INTERNATIONAL JOURNAL OF HYDROGEN ENERGY*, 01 June 2022, vol. 47 (53), 22302-22315